# EUROPEAN PATENT SPECIFICATION

(11) **EP 2 477 785 B1**
(45) Date of publication and mention of the grant of the patent: **03.09.2014**
(21) Application number: 10748139.2
(22) Date of filing: 30.07.2010
(51) Int. Cl.: B23P 19/06, B25B 21/02, B21J 15/04, B25C 3/00

(54) **DEVICE FOR THE APPLICATION OF INSERTS.**
VORRICHTUNG ZUR EINBRINGUNG VON EINSÄTZEN.
DISPOSITIF POUR L'APPLICATION DES INSERTS.

(30) Priority: 16.09.2009 IT VI20090223
(43) Date of publication of application: 25.07.2012
(73) Proprietor: Fiam Utensili Pneumatici S.p.A., 36100 Vicenza (VI) (IT)
(72) Inventor: CASOLO, Lorenzo, I-36100 Vicenza (IT)
(74) Representative: Ziliotto, Tiziano
(86) International application number: PCT/IB2010/001927
(87) International publication number: WO 2011/033349

(56) References cited:
- EP-A2- 0 338 406
- US-A- 5 862 724
- US-A1- 2005 072 585

## Description

The present invention concerns a device, according to the preamble of claim 1, for the application of inserts. Inserts are preferably screws, nails or rivets, more preferably screws, but are not limited to these items. In particular, the present invention concerns an automatic device for the application of inserts. In greater detail, the device comprises a tool capable of performing at least two movements. In even greater detail, the present invention concerns a device for the application of inserts in which a tool performs a first movement for arranging at least one insert in a predetermined position, and a second movement for making the insert advance in its final seat or in the material in which it has to be driven. In even greater detail, said tool can perform at least three movements, at least one of which is a rotary movement. Even more specifically, the present invention concerns a device for the application of inserts that is pneumatically or hydraulically operated.

The devices for positioning inserts to which the present invention refers are both manual devices and devices suited to be associated with automatic machines. Said devices can be successfully applied in particular when it is necessary to position inserts with great precision and in particular in places where access is difficult and visibility scarce. In the field of the devices for the application of inserts a first type of automatic screwer is known that comprises a cylinder with an operating piston and a positioning piston sliding therein. The operating piston is associated with a tool intended to act on a screw that must be screwed and is positioned on an insert holder accessory located in front of the cylinder. During one screw positioning step, the positioning piston is kept fixed so that it serves as a stop for the operating piston that is pushed pneumatically towards the screw in order to position it so that it is "visible", that is, with the tip outside the insert holder accessory. During a second step, the positioning piston is free to slide and doesn't represent any longer an obstacle for the operating piston which can continue its stroke so as to eject the screw from the screw holder accessory and screw it in its final seat. Both pistons are pushed backwards in a position suitable for loading a successive screw, pressurizing a return chamber positioned between the insert holder accessory and the positioning piston.

A second known type of pneumatic screwer comprises a positioning piston and an operating piston placed in two separate chambers of a cylinder. Initially the positioning piston pushes the operating piston in the position with the screw in view. Then only the operating piston completes the stroke to screw the screw. In this case the pistons are pushed backwards in a position suitable for loading a successive screw, pressurizing a return chamber positioned between the insert holder accessory and the operating piston.

As can be observed, even if in the two known screwers the position of the operating piston and of the positioning piston is inverted, in both of them it is necessary to have a return chamber in a front area of the screwer. This makes it necessary to apply or to make also the feeding ducts of said return chamber in the front area, which makes the device much more complex and uncomfortable to use, especially manually. In some cases the insert holder accessory is shaped so as to adapt to the vicinity of the ducts, in other cases the device is longer so that the accessory is away from the ducts. As a consequence of the above, the known solutions cannot ensure precision and comfortable use, as owing to the presence of the ducts they do not make it possible to reach very small spaces, or require a very firm hand due to the length of the device, or more generally hinder the view of the front area and make it impossible to see where the screw is being positioned.

Example of prior art solutions can be found in documents US 5862724 and US 2005/072585.

The main object of the present invention is therefore to solve at least partially the problems posed by the known solutions.

In particular, it is one object of the present invention to provide a device for the application of inserts that ensures more precise positioning and more comfortable use compared to the known art.

A further object of the present invention is to provide a device for the application of inserts suited to be used also in very small spaces.

### SUMMARY OF THE INVENTION

The present invention is based on the general consideration that the fewest components are positioned on the front area of the device, the higher are visibility and the possibility of use in very small spaces. Furthermore, the present invention is based on the general consideration that the pistons can interact with each other in order to generate the desired combined movements. The present invention is based on the further general consideration that by exploiting the movement of the piston farther away with respect to the front end of the device in order to move both pistons backwards it is possible to avoid delivering pressurized air or oil to the front area and therefore complicating and encumbering said area with ducts or other functional parts of the device. In other words, according to the invention the front chambers aren't fed with pressurized encumbering said area with ducts or other functional parts of the device. In other words, according to the invention the front chambers aren't fed with pressurized air or oil. A further general consideration on which the invention is based lies in that if the furthest piston is the operating piston, it is possible to exploit a telescopic coupling to make both pistons slide backwards by acting only on the operating piston. An even further general consideration on which the invention is based lies in that, if the active surfaces of the two pistons on which the pressurized air acts have a different extension, under the same pressure conditions it is possible to induce or facilitate the relative or synchronous movement of the two pistons, especially during the positioning movement. According to a first aspect, the present invention concerns a device for the application of inserts according to claim 1.

The first evident advantage offered by the present invention lies in that the front part of the device doesn't pose any construction constraint, especially regarding the passage of the feeding ducts. In other words, the maximum visibility of the front area is guaranteed. Furthermore, this solution favours the maximum universality and compactness of any insert holder accessory positioned at the front end of the cylinder that can be carried out in any shape.

Considering that the overall dimensions, especially in length, can be very compact, with consequent reduction of the weights, too, maximum manoeuvrability of the device is guaranteed, as well as reduced operator stress. Further embodiments of the present invention are described in detail in the dependent claims.

Further advantages, objects and characteristics, as well as further embodiments of the present invention are described in the claims and are illustrated in the following description, with reference to the attached drawings. In particular :
- figure 1 is a schematic view of a longitudinal section of a device for the application of inserts carried out according to the present invention;
- figures 2, 3 and 4 are schematic views of a longitudinal section of the device for the application of inserts respectively in three separate steps of a possible operating cycle;
- figure 5 is a schematic view of the device for the application of inserts shown in Figure 1 illustrating the manual use of the same;
- figure 6 is a schematic view of a longitudinal section of an alternative embodiment of the device for the application of inserts shown in Figure 1 according to the present invention.

Even if the present invention is described with reference to the embodiments shown in the drawings, the present invention isn't limited thereto. On the contrary, the embodiments described and illustrated herein clarify some aspects of the present invention, the scope of which is defined in the claims.

The present invention has shown to be particularly advantageous when applied to a device for the insertion of screws that here below is called screwer for the sake of brevity. For this reason, and to simplify the following description, here below reference is made to the embodiments pertaining to the specific field of screwers. It should however be noted that the present invention can also be a device for the application of other types of inserts, for example nails or rivets.

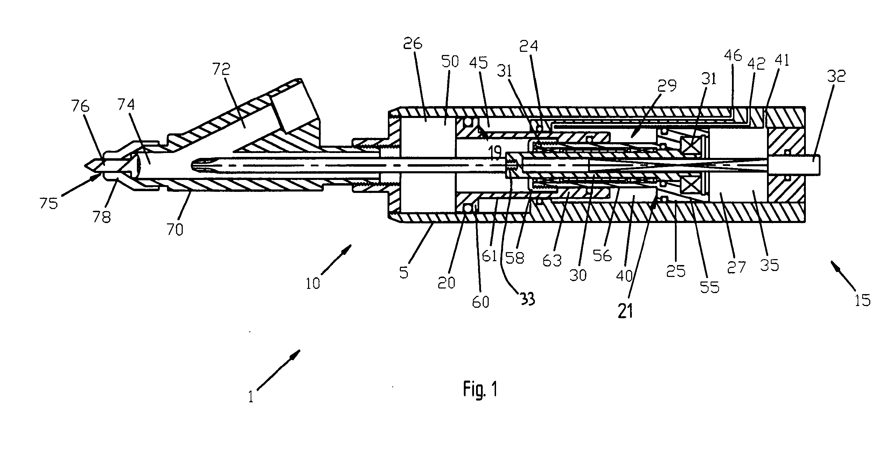

A screwer of the type that can be obtained by means of the present invention is described below with reference to Figure 1.

The device for the application of inserts 1 shown in Figure 1 is a screwer 1 comprising a hollow cylinder 5 with a front end 10 designed to face towards the insert during use, and a rear end 15. A positioning piston 20 and an operating piston 25, whose function will be better clarified below, slide inside the cylinder 5. The positioning piston and the operating piston respectively slide in a front chamber 26 and a rear chamber 27 of the cylinder 5, divided by a collar 24 and such that the front chamber has a larger bore than the rear chamber 35, and supports a tool 28 whose shape corresponds to the shape of the insert on which it is intended to act, in this case a screwdriver. The tool 28 is moved by the operating piston 25 from and towards the front end 10. The operating piston 25 preferably but not necessarily supports the tool 28 through the interposition of a rolling unit 29 comprising a tool holder shaft 30 and bearings 31 that allow the shaft 30 to rotate freely with respect to the operating piston 25. The rolling unit is set rotating by a drive unit (not illustrated) preferably but not necessarily external to the device 1, and connected to it for example through the tang 32 that slides telescopically with respect to the tool holder shaft 30 and at the same time has a matching shape in order to be able to set it rotating. The tool 28 is coupled with the tool holder shaft and is set rotating by it, for example through a spindle or another coupling device, like a threaded collar 33. It cannot be excluded, however, that there may be cases in which the tool cannot be removed from the tool holder shaft, that is, is obtained in a single piece with the tool holder shaft. The operating piston divides the rear chamber 27 in two sub-chambers respectively called advance chamber 35 and return chamber 40, which can be pressurized or discharged through the corresponding operating duct 41 and return duct 42. The positioning piston divides the front chamber 26 respectively into a position chamber 45 and a neutral chamber 50. The position chamber 45 can be pressurized through the position duct 46, while the neutral chamber 50 isn't connected to any duct and therefore doesn't exert any action on the positioning piston 20. The chambers 35, 40, 45 are preferably fed with compressed air delivered by the respective feeding ducts 41, 42, 46, alternatively there are other embodiments in which feeding is made with pressurized oil.

In the embodiment shown in Figure 1 the operating piston 25 and the positioning piston 20 are telescopically connected to each other, in particular the operating piston can slide inside the positioning piston and travel along a predetermined stroke. The operating piston 25 comprises a first enlarged head 55 sliding in the rear chamber 27 and a first cylindrical collar 56 that projects from the first enlarged head 55 towards the front end 10 of the cylinder 5. A first stop element 58 suited to provide a stop for the positioning piston 20 in the direction of the front end 10 of the cylinder 5 is arranged at the end of the first cylindrical collar 56 opposite the enlarged head 55. Preferably, said first stop element 58 can be separated from the first collar 56, more preferably it is a ring nut screwed on the collar 56. The positioning piston 20 comprises a second enlarged head 60 with bore larger than that of the first enlarged head 55 and sliding in the front chamber 26, and a second cylindrical collar 61 projecting from the second enlarged head 60 in the direction of the rear end 15 of the cylinder 5. A second stop element 63, suited to provide a stop for the operating piston 25 in the direction of the rear end 15 of the cylinder 5, is positioned at the end of the second cylindrical collar 61 opposite the enlarged head 60. It can be observed that the first stop element 58 is positioned between the first and the second enlarged head 55, 60, while the second stop element 63 is positioned between the first stop element 58 and the first enlarged head 55. In this manner, when the enlarged heads 55 and 60 move away during the telescopic sliding movement, the two stop elements 58 and 63 strike against each other determining a telescopic stroke with predetermined length. A person skilled in the art will easily understand that the sequence of elements proposed up to this point can be easily modified, for example inverted, without affecting the functionality of the device.

The device can be completed, for example, with an insert holder accessory 70 comprising, for example, an insert feeding duct 72 and a pushing duct 74 in communication with each other. The tool 28 is capable of penetrating in the pushing duct 74 in order to push an insert 76 towards an outlet opening 75, at least partially obstructed by a retaining device 78, like a drilled elastic sheath or a pair of moving lips that exert friction on the insert.

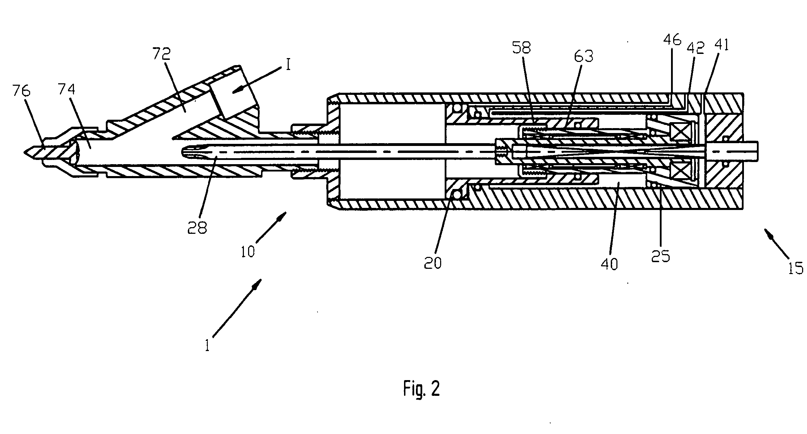

With reference to the Figures 2, 3 and 4, a possible operating cycle of the device 1 of Figure 1 will now be described. In particular, it can be noted that the feeding ducts 41, 42 and 46 are connected to a valve system and if necessary to pressure compensating systems, not illustrated herein, operated manually or automatically in order to obtain the filling or the discharge of the sub-chambers and therefore the movement of the pistons.

Figure 2 shows a loading step of an insert 76. In this step the tool 28 is in a completely retracted position in the pushing duct 74, in such a way as to avoid obstructing the feeding duct 72 through which the insert 76 is inserted according to the arrow I. In order to move the tool 28 in this position and keep it there the only chamber to be pressurized is the return chamber 40. In this manner the operating piston 25 is pushed backwards towards the rear end 15 of the cylinder 5, that is, is brought to the position in which it is farthest from the front end 10 of the cylinder 5. Furthermore, the operating piston 25 moves backwards also the positioning piston 20 due to the action of the stop elements 58 and 63.

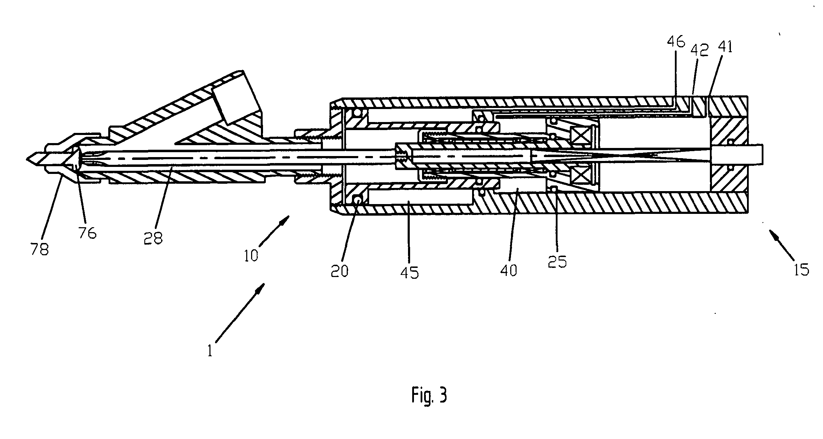

Figure 3 shows the step in which the operating piston 25 is moved to a position where the insert 76 is visible, that is, partially projects from the insert holder accessory 70. In this step the return chamber 40 is kept under pressure while also the position chamber 45 is pressurized. The positioning piston 20 then moves towards the front end 10 of the cylinder 5 bringing the operating piston 25 with itself due to the action of the stop elements 58 and 63 and exploiting the force difference that is generated between the different surfaces affected by the pistons under the same pressure conditions. The active surface 19 of the positioning piston 20 on which the pressurized air of the chamber 45 acts is in fact larger than the active surface 21 of the operating piston on which the pressurized air of the chamber 40 acts. The stroke of the positioning piston 20 is shorter than the total stroke of the operating piston 25. When the positioning piston 20 completes its stroke the operating piston 25 cannot proceed any further, unless the pressure in the return chamber 40 is eliminated. The positioning piston 20 in this manner "places" the operating piston 25 in a predetermined intermediate position between its position nearest to and its position farthest from the front end 10 of the cylinder 5. In this position the tool 28 is operatively active on the insert 76 in order to maintain a part of it inside the retaining device 78 and a part of it outside, so that it can be seen by an operator. The visible insert 76 can thus be advantageously used as a support for the tool and to prevent any contact between the retaining device 78 and the possibly delicate surface of a piece, as well as to facilitate the opening of the device 78.

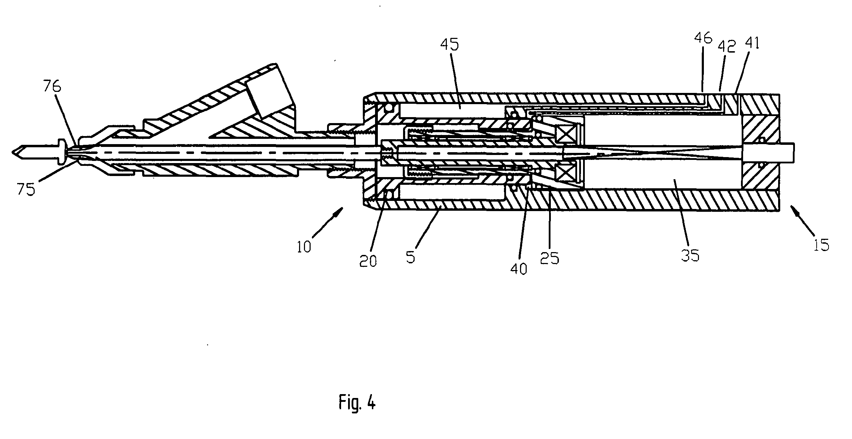

Figure 4 shows an advance step of the insert 76 in which the tool 28 is operatively active in order to eject the insert 76 from the retaining device 78. In order to carry out this operation the position chamber 45 and the return chamber 40 are discharged through the corresponding feeding ducts 42 and 46, so that the pressure inside them decreases, while the advance chamber 35 is pressurized. In this manner the operating piston 25 can advance farther towards the front end 10 of the cylinder 5, thus covering the final section of its stroke. It can be observed that in the case of a screwer it is necessary that at least during the advance step of Figure 4 the drive unit (not illustrated) sets the tool 28 rotating in order to screw the screw 76.

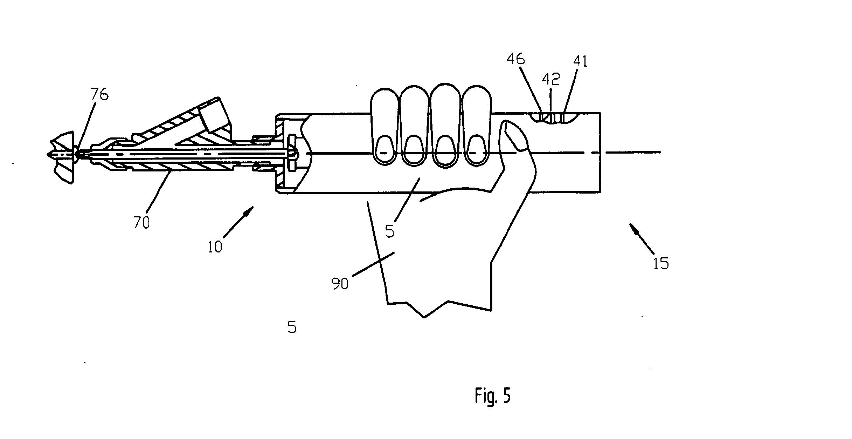

An alternative embodiment of the device of Figure 1 carried out according to the present invention will be now described with reference to Figure 5. Here below, the elements corresponding to those shown in the Figures from 1 to 4 will be indicated with the same reference number, increased by 100 or a multiple thereof.

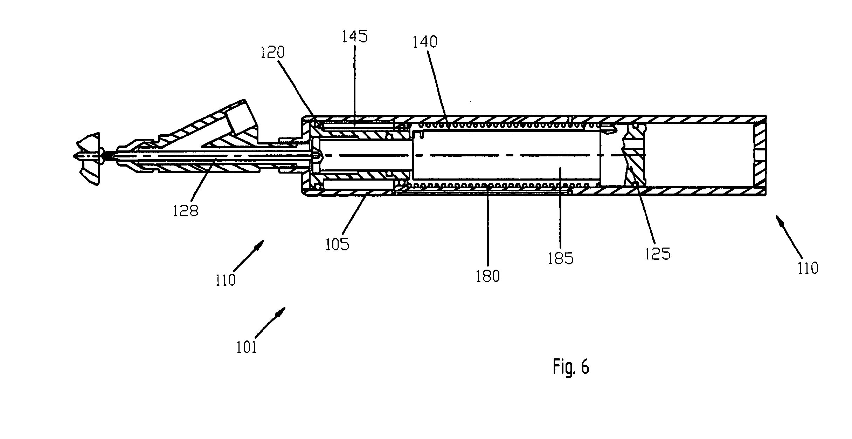

Figure 6 shows an alternative device for the application of inserts 101 that is differentiated from the one illustrated in Figure 1 due to the fact that the return chamber 140 isn't fed with pressurized air but contains at least one elastic element 180, preferably a spring, which acts as the mover of the operating piston 125 instead of the air or oil. The possibility to add the spring 180 to the pressurized air or oil cannot be excluded. The positioning piston 120, instead, works by means of pressurized air or oil in the position chamber 145. The front and the rear end of the cylinder 105 in Figure 6 are respectively indicated by the reference numbers 110 and 115.

According to this embodiment, it is possible to set the tool 128 rotating by means of a drive unit 185 coupled with the operating piston 125 and moving with it inside the cylinder 105. A technician skilled in the art will certainly understand that the solution with external drive unit (not illustrated) of Figure 1 and the solution with internal drive unit 185 of Figure 6 are alternative solutions and can be applied in the same way to any embodiment of the invention.

Figure 5 shows the manual use of the device 1 of Figure 1 (but the same remarks can be made for the device 101 of Figure 6), in particular it shows that the cylinder 5 can be used as a hand grip in which the parts of the feeding ducts 41, 42 and 46 coming out of the cylinder for a possible connection to an external compressed air or pressurized oil source remain between the hand of the operator 90 and the rear end 15 of the cylinder 5. In this manner any ducts or external feeding elements (not illustrated) don't hinder the view of the insert 76, don't have any influence on the shape of the insert holder accessory 70 and on the length of the device 1, don't cause stress to the operator's arm and don't prevent the access of the accessory 70 to very small spaces.

It has thus been shown that the invention described above achieves the set objects. Even if the present invention has been described with reference to two particular embodiments illustrated in Figures from 1 to 6, it should be noted that it is not limited to said embodiments, rather, further variants come within the scope of the present invention, which is defined by the claims appended.

## Claims

1. Device for the application of inserts (76) comprising a tool (28, 128) preferably rotatable and suitable for interacting during use with an insert (76) which is applied by means of the device (1, 101), a cylinder (5, 105) having a front end (10, 110) designed to face towards the insert during use and a rear end (15, 115), at least one operating piston (25, 125) adapted to slide inside a rear chamber (27) of the cylinder (5, 105) between a position nearer to and farther from the front end (10, 110) in order to move the tool (28, 128) with respect to the cylinder (5, 105), at least one positioning piston (20, 120) adapted to slide inside a front chamber (26) of the cylinder (5) for interacting with the operating piston (25, 125) in order to position the operating piston (25, 125) in an intermediate position between the nearest position and the farthest position, **characterized in that** said operating piston (25) divides said rear chamber (27) into an advance chamber (35) and a return chamber (40), **in that** said positioning piston (20) divides said front chamber (26) into a position chamber (45) and a neutral chamber (50), and **in that** said advance chamber (35), said return chamber (40) and said position chamber (45) are adapted to be alternatively pressurized with compressed air or pressurized oil and discharged, thus resulting in said operating and positioning pistons being slid telescopically into each other and **in that** said operating piston (25, 125) comprises a first enlarged head (55) and a first stop element (58) suitable for providing a stop for said positioning piston (20, 120) in the direction of the front end (10, 110) of the cylinder (5, 105), and **in that** said positioning piston (20) comprises a second enlarged head (60) and a second stop element (63) suitable for providing a stop for said operating piston (25) in the direction of the rear end (15, 115) of the cylinder (5, 105) so that the positioning piston and the operating piston interact in such a way that the operating piston (25) can move the positioning piston (20, 120) towards the rear end (15, 115) of the cylinder (5, 105).

2. Device for the application of inserts according to claim 1, **characterized in that** the said first stop element (58) is positioned between said first and second enlarged head (55, 60) and said second stop element (63) is positioned between said first stop element (58) and said enlarged head (55).

3. Device for the application of inserts according to claim 2, **characterized in that** said first and second stop elements (58, 63) are positioned respectively on a first and a second collar (56, 61) connected respectively to said first and second enlarged head (55, 60).

4. Device for the application of inserts according to any one of claims 1, 2, 3, **characterized in that** at least one out of the first and the second stop element (58) can be disassembled with respect to the relative piston (56).

5. Device for the application of inserts as claimed in one of claims 1 to 4, **characterized in that** a return chamber (40, 140) is positioned between the two pistons.

6. Device for the application of inserts according to claim 5, **characterized in that** the return chamber (40, 140) is connected to a pneumatic or hydraulic duct (42) so that it is pressurised when the two pistons (20, 120, 25, 125) have to be re-set to their position nearest the rear end (15, 115).

7. Device for the application of inserts according to any one of the preceding claims **characterized in that** the positioning piston (20, 120) is nearer the front end (10, 110) of the operating piston (25, 125).

8. Device for the application of inserts according to one of claims 1 to 7, **characterized in that** the operating piston (25, 125) runs inside the cylinder (5, 105) along a first portion of stroke together with the positioning piston (20, 120), and the operating piston alone runs inside the cylinder along a second portion of stroke.

9. Device for the application of inserts according to claim 8, **characterized in that** the positioning piston (20, 120) feeds or pushes the operating piston (25, 125) along the first portion of stroke.

10. Device for the application of inserts according to claim 9, **characterized in that** the operating piston (25, 125) runs inside the positioning piston (20, 120).

11. Device for the application of inserts (76) according to any one of the preceding claims, **characterized in that** it comprises an insert holder accessory (70) and the intermediate position of the operating piston (25, 125) corresponds to a pre-established position of the tool (28, 128) which allows an insert (76) to protrude at least partially from the insert holder accessory (70).

## Patentansprüche

1. Vorrichtung für die Anbringung von Einsätzen (76), ein Werkzeug (28, 128) umfassend, das vorzugsweise drehbar ist und geeignet, während des Gebrauchs mit einem Einsatz (76) zu interagieren, der mittels der Vorrichtung (1, 101) angebracht wird, sowie einen Zylinder (5, 105) umfassend mit einem vorderen Ende (10, 110), das darauf ausgelegt ist, während des Gebrauchs zum Einsatz hin ausgerichtet zu sein und mit einem hinteren Ende (15, 115), sowie mit wenigstens einem Arbeitskolben (25, 125), der geeignet ist, innerhalb einer hinteren Kammer (27) des Zylinders (5, 105) zwischen einer näher am und einer entfernter vom vorderen Ende (10, 110) befindlichen Position zu gleiten, um das Werkzeug (28, 128) bezüglich des Zylinders (5, 105) zu bewegen, und mit wenigstens einem Positionierungskolben (20, 120), der geeignet ist, innerhalb einer vorderen Kammer (26) des Zylinders (5) zu gleiten, um mit dem Arbeitskolben (25, 125) zu interagieren, um den Arbeitskolben (25, 125) in eine Zwischenposition zwischen der näheren und der entfernteren Position zu bringen, **dadurch gekennzeichnet, dass** der besagte Arbeitskolben (25) die besagte hintere Kammer (27) in eine Vorlaufkammer (35) und eine Rücklaufkammer (40) teilt, und dadurch, dass der besagte Positionierungskolben (20) die besagte vordere Kammer (26) in eine Positionskammer (45) und in eine neutrale Kammer (50) teilt, und dadurch, dass die besagte Vorlaufkammer (35), die besagte Rücklaufkammer (40) und die besagte Positionskammer (45) geeignet sind, abwechselnd mit Druckluft oder unter Druck stehendem Öl unter Druck gesetzt und abgelassen zu werden, so dass die besagten Arbeits- bzw. Positionierungskolben infolgedessen teleskopisch ineinander geschoben werden, und dadurch, dass der besagte Arbeitskolben (25, 125) einen ersten, verbreiterten Kopf (55) aufweist sowie ein erstes Anschlagelement (58), das geeignet ist, einen Stopp des besagten Positionierungskolbens (20, 120) in Richtung des vorderen Endes (10, 110) des Zylinders (5, 105) zu bewirken, und dadurch, dass der besagte Positionierungskolben (20) einen zweiten, verbreiterten Kopf (60) und ein zweites Anschlagelement ((63) umfasst, das geeignet ist, einen Stopp des besagten Arbeitszylinders (25) in Richtung des hinteren Endes (15, 115) des Zylinders (5, 105) zu bewirken, so dass der Positionierungskolben und der Arbeitskolben derart miteinander interagieren, dass der Arbeitskolben (25) den Positionierungskolben (20, 120) zum hinteren Ende (15, 115) des Zylinders (5, 105) bewegen kann.

2. Vorrichtung für die Anbringung von Einsätzen gemäß Patentanspruch 1, **dadurch gekennzeichnet, dass** sich das besagte, erste Anschlagelement (58) zwischen dem besagten ersten und dem besagten zweiten, verbreiterten Kopf (55, 60) befindet und dass sich das besagte zweite Anschlagelement (63) zwischen dem besagten ersten Anschlagelement (58) und dem besagten, verbreiterten Kopf (55) befindet.

3. Vorrichtung für die Anbringung von Einsätzen gemäß Patentanspruch 2, **dadurch gekennzeichnet, dass** sich das besagte erste und das besagte zweite Anschlagelement (58, 63) jeweils an einem ersten und einem zweiten Bundring (56, 61) befinden, die jeweils mit dem besagten ersten und dem besagten zweiten, verbreiterten Kopf (55, 60) verbunden sind.

4. Vorrichtung für die Anbringung von Einsätzen gemäß eines jeden der Patentansprüche 1, 2, 3, **dadurch gekennzeichnet, dass** vom ersten und vom zweiten Anschlagelement wenigstens eines (58) vom jeweiligen Kolben (56) abgebaut werden kann.

5. Vorrichtung für die Anbringung von Einsätzen gemäß eines der Patentansprüche 1 bis 4, **dadurch gekennzeichnet, dass** zwischen den beiden Kolben eine Rücklaufkammer (40, 140) positioniert ist.

6. Vorrichtung für die Anbringung von Einsätzen gemäß Patentanspruch 5, **dadurch gekennzeichnet, dass** die Rücklaufkammer (40, 140) mit einer pneumatischen oder hydraulischen Leitung (42) verbunden ist, um unter Druck gesetzt zu werden, wenn die beiden Kolben (20, 120, 25, 125) in ihre dem hinteren Ende (15, 115) nächstgelegene Position zurückgebracht werden müssen.

7. Vorrichtung für die Anbringung von Einsätzen gemäß eines jeden der vorstehenden Patentansprüche, **dadurch gekennzeichnet, dass** sich der Positionierungskolben (20, 120) näher am vorderen Ende (10, 110) des Arbeitskolbens (25, 125) befindet.

8. Vorrichtung für die Anbringung von Einsätzen gemäß eines der Patentansprüche 1 bis 7, **dadurch gekennzeichnet, dass** der Arbeitskolben (25, 125) einen ersten Hubabschnitt entlang gemeinsam mit den Positionierungskolben (20, 120) innerhalb des Zylinders (5, 105) gleitet, und der Arbeitskolben allein innerhalb des Zylinders (5, 105) einen zweiten Hubabschnitt entlang gleitet.

9. Vorrichtung für die Anbringung von Einsätzen gemäß Patentanspruch 8, **dadurch gekennzeichnet, dass** der Positionierungskolben (20, 120) den Arbeitskolben (25, 125) den ersten Hubabschnitt entlang zuführt oder drückt.

10. Vorrichtung für die Anbringung von Einsätzen gemäß Patentanspruch 9, **dadurch gekennzeichnet, dass** der Arbeitskolben (25, 125) innerhalb des Positionierungskolbens (20, 120) gleitet.

11. Vorrichtung für die Anbringung von Einsätzen (76) gemäß eines jeden der vorstehenden Patentansprüche, **dadurch gekennzeichnet, dass** sie ein Einsatzhalter-Zubehör (70) umfasst und dass die Zwischenposition des Arbeitskolbens (25, 125) einer vorbestimmten Position des Werkzeugs (28, 128) entspricht, die es erlaubt, dass ein Einsatz (76) wenigstens teilweise aus dem Einsatzhalter-Zubehör (70) hervorsteht.

## Revendications

1. Dispositif pour l'application d'inserts (76) comprenant un outil (28, 128) préférablement pivotable et apte à interagir pendant son usage avec un insert (76) qui est appliqué au moyen du dispositif (1, 101), un cylindre (5, 105) ayant une extrémité avant (10, 110) conçue pour être orientée vers l'insert, pendant son usage, et une extrémité arrière (15, 115), au moins un piston de travail (25, 125) indiqué pour coulisser à l'intérieur d'une chambre arrière (27) du cylindre (5, 105) entre une position plus proche et une position plus éloignée de l'extrémité avant (10, 110) pour déplacer l'outil (28, 128) par rapport au cylindre (5,105), au moins un piston de positionnement (20, 120) apte à coulisser à l'intérieur d'une chambre avant (26) du cylindre (5) pour interagir avec le piston de travail (25, 125) afin de positionner le piston de travail (25, 125) en une position intermédiaire entre la position la plus proche et la position la plus éloignée, **caractérisé en ce que** ledit piston de travail (25) partage ladite chambre arrière (27) en une chambre d'avancement (35) et une chambre de retour (40), **en ce que** ledit piston de positionnement (20) partage ladite chambre avant (26) en une chambre di position (45) et une chambre neutre (50), et **en ce que** ladite chambre d'avancement (35), ladite chambre de retour (40) et ladite chambre position (45) sont indiquées pour être pressurisées alternativement avec de l'air comprimé ou huile pressurisée et déchargées, ce qui fait en sorte que ledit piston de travail e ledit piston de positionnement coulissent de manière télescopique l'un dans l'autre et **en ce que** ledit piston de travail (25, 125) comprend une première tête élargie (55) et un premier élément de butée (58) indiqué pour réaliser une butée pour ledit piston de positionnement (20, 120) dans la direction de l'extrémité avant (10, 110) du cylindre (5, 105), et **en ce que** ledit piston de positionnement (20) comprend une deuxième tête élargie (60) et un deuxième élément de butée (63) indiqué pour réaliser une butée pour ledit piston de travail (25) dans la direction de l'extrémité arrière (15, 115) du cylindre (5, 105) de façon à ce que le piston de positionnement et le piston de travail interagissent d'une telle manière à ce que le piston de travail (25) puisse déplacer le piston de positionnement (20, 120) vers l'extrémité arrière (15, 115) du cylindre (5, 105).

2. Dispositif pour l'application d'inserts selon la revendication 1, **caractérisé en ce que** le premier élément de butée (58) est positionné entre ladite première et ladite deuxième têtes élargies (55, 60) et ledit deuxième élément de butée (63) est positionné entre ledit premier élément de butée (58) et ladite tête élargie (55).

3. Dispositif pour l'application d'inserts selon la revendication 2, **caractérisé en ce que** ledit premier et ledit deuxième éléments de butée (58, 63) sont positionnés respectivement sur un premier et un deuxième colliers (56, 61) reliés respectivement à la première et à la deuxième têtes élargies (55, 60).

4. Dispositif pour l'application d'inserts selon l'une quelconque des revendications 1, 2, 3, **caractérisé en ce qu'**au moins un entre le premier et le deuxième élément de butée (58) peut être démonté par rapport au piston relatif (56).

5. Dispositif pour l'application d'inserts selon l'une des revendications de 1 à 4, **caractérisé en ce que** la chambre de retour (40, 140) est positionnée entre les deux pistons.

6. Dispositif pour l'application d'inserts selon la revendication 5, **caractérisé en ce que** la chambre de retour (40, 140) est reliée à un conduit pneumatique ou hydraulique (42) de façon à ce qu'elle est pressurisée quand les deux pistons (20, 120, 25, 125) doivent être réglés de nouveau à leur position la plus proche de l'extrémité arrière (15, 115).

7. Dispositif pour l'application d'inserts selon l'une quelconque des revendications précédentes, **caractérisé en ce que** le piston de positionnement (20, 120) est plus proche de l'extrémité avant (10, 110) du piston de travail (25, 125).

8. Dispositif pour l'application d'inserts selon l'une des revendications de 1 à 7, **caractérisé en ce que** le piston de travail (25, 125) coulisse à l'intérieur du cylindre (5, 105) le long d'une première portion de butée avec le piston de positionnement (20, 120), et le piston de travail coulisse lui seul à l'intérieur du cylindre le long d'une deuxième portion de butée.

9. Dispositif pour l'application d'inserts selon la revendication 8, **caractérisé en ce que** le piston de positionnement (20, 120) alimente ou pousse le piston de travail (25, 125) le long de la première portion de butée.

10. Dispositif pour l'application d'inserts selon la revendication 9, **caractérisé en ce que** le piston de travail (25, 125) coulisse à l'intérieur du piston de positionnement (20, 120).

11. Dispositif pour l'application d'inserts (76) selon l'une quelconque des revendications précédentes, **caractérisé en ce qu'**il comprend un accessoire pour le support de l'insert (70) et la position intermédiaire du piston de travail (25, 125) correspond à une position préétablie de l'outil (28, 128) qui permet à l'insert de saillir au moins partiellement de l'accessoire pour le support de l'insert (70).
